# EUROPEAN PATENT APPLICATION

(11) **EP 2 444 524 A1**
(43) Date of publication of application: **25.04.2012**
(21) Application number: 11186588.7
(22) Date of filing: 25.10.2011
(51) Int. Cl.: C23C 28/00, C23C 28/02, F01D 5/28

(54) **Self dressing, mildly abrasive coating for clearance control**

(30) Priority: 25.10.2010 US 910954
(71) Applicant: United Technologies Corporation, Hartford, CT 06101 (US)
(72) Inventor: Bintz,, Matthew E., West Hartford, CT Connecticut 06107 (US); Strock,, Christopher W., Kennebunk, ME Maine 04043 (US)
(74) Representative: Tomlinson, Kerry John

(57) **Abstract**

An abrasive coating (60) for rotor shafts (50) that interact with cantilevered vanes (26) to form an abradable air seal in a turbine engine. The abrasive coating including a metal bond coat layer (62) on the rotor shaft, and an abrasive layer (66) for contact with vanes during operation of the rotor shaft, the abrasive layer including a plurality of abrasive grit particles in a matrix, the abrasive grit particles are selected from the group consisting of cubic boron nitride (CBN), zirconia, alumina, silicon carbide, diamond and mixtures thereof.

## Description

### BACKGROUND

Gas turbine engines include compressor rotors with a plurality of rotating compressor blades. Minimizing the leakage of air between tips of the compressor blades and a casing of the gas turbine engine increases the efficiency of the gas turbine engine as the leakage of air over the tips of the compressor blades can cause aerodynamic efficiency losses. To minimize this, the gap at tips of the compressor blades is set so small that at certain conditions, the blade tips may rub against and engage an abradable seal on the casing of the gas turbine. The abradability of the seal material prevents damage to the blades while the seal material itself wears to generate an optimized mating surface and thus reduce the leakage of air.

Cantilevered vanes that seal against a rotor shaft are also used for elimination of the air leakage in turbine engines. Current cantilevered vane tip sealing requires that the tip gaps need to be set more open than desired for optimum seal in order to prevent rub interactions that can cause rotor shaft spallation, vane damage or rotor shaft burn through caused by thermal runaway events during rubs. Current materials that are primarily ceramics have been shown to lack the durability to prevent spallation and they lack the abradability to prevent vane damage.

### SUMMARY

The present invention comprises an abrasive coating on the surface that interacts with the vane tips with a low strength, abrasive composite top layer that contains sharp abrasive grits held in a composite matrix of hexagonal boron nitride (hBN), nickel, chromium, aluminum or NiCrAlY. Examples of sharp abrasive grits are cubic boron nitride (CBN), zirconia, alumina, silicon carbide and diamond.

The abrasive coating includes a base bond coat layer. The bond coat may be MCr, MCrA1, MCrAlY or a refractory modified MCrAlY, where M is nickel, cobalt, iron or mixtures thereof.

When thermal protection is needed, there is also a layer between the abrasive grit and on the bond coat comprising a ceramic layer that acts as a thermal barrier to protect the rotor shaft. Ceramic layers include zirconia, hafnia, mullite, alumina.

### BRIEF DESCRIPTION OF THE DRAWINGS

FIG. 1 illustrates a simplified cross-sectional view of a gas turbine engine.

FIG. 2 illustrates a simplified cross sectional view of a rotor shaft inside a casing illustrating the relationship of the rotor and cantilevered vanes taken along the line 2-2 of FIG. 1, not to scale.

FIG. 3 is a cross sectional view taken along the line 3-3 of FIG. 2, not to scale.

FIG. 4 is a cross sectional view of another embodiment.

### DETAILED DESCRIPTION

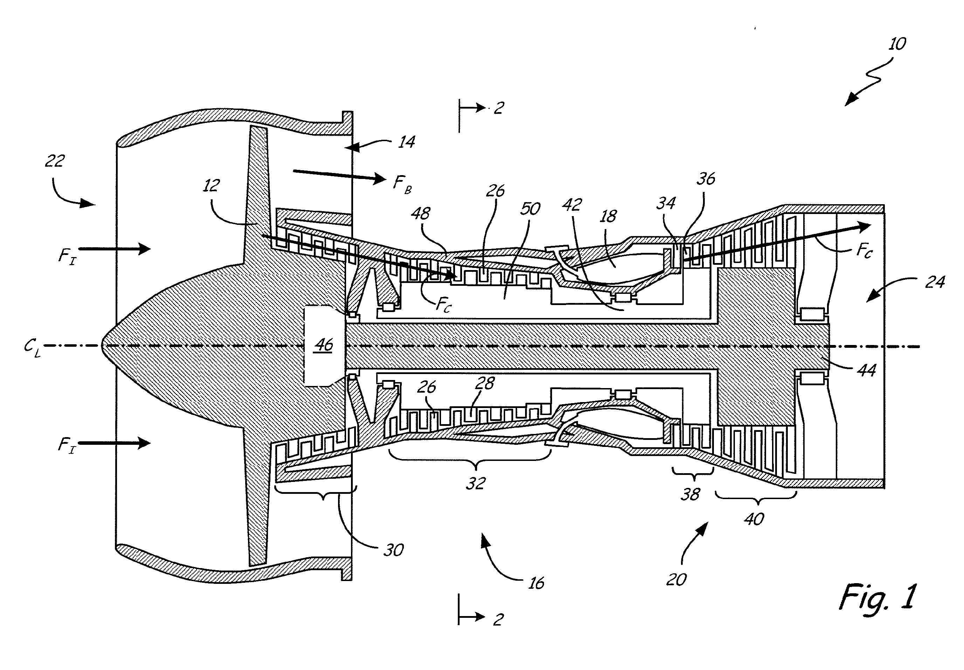

FIG. 1 is a cross-sectional view of gas turbine engine 10, in a turbofan embodiment. As shown in FIG. 1, turbine engine 10 comprises fan 12 positioned in bypass duct 14, with bypass duct 14 oriented about a turbine core comprising compressor (compressor section) 16, combustor (or combustors) 18 and turbine (turbine section) 20, arranged in flow series with upstream inlet 22 and downstream exhaust 24.

Compressor 16 comprises stages of compressor vanes 26 and blades 28 arranged in low pressure compressor (LPC) section 30 and high pressure compressor (LPC) section 32. Turbine 20 comprises stages of turbine vanes 34 and turbine blades 36 arranged in high pressure turbine (HPT) section 38 and low pressure turbine (LPT) section 40. HPT section 38 is coupled to HPC section 32 via HPT shaft 42, forming the high pressure spool or high spool. LPT section 40 is coupled to LPC section 30 and fan 12 via LPT shaft 44, forming the low pressure spool or low spool. HPT shaft 42 and LPT shaft 44 are typically coaxially mounted, with the high and low spools independently rotating about turbine axis (centerline) C_{L}.

Fan 12 comprises a number of fan airfoils circumferentially arranged around a fan disk or other rotating member, which is coupled (directly or indirectly) to LPC section 30 and driven by LPT shaft 44. In some embodiments, fan 12 is coupled to the fan spool via geared fan drive mechanism 46, providing independent fan speed control.

As shown in FIG. 1, fan 12 is forward-mounted and provides thrust by accelerating flow downstream through bypass duct 14, for example in a high-bypass configuration suitable for commercial and regional jet aircraft operations. Alternatively, fan 12 is an unducted fan or propeller assembly, in either a forward or aft-mounted configuration. In these various embodiments turbine engine 10 comprises any of a high-bypass turbofan, a low-bypass turbofan or a turboprop engine, and the number of spools and the shaft configurations may vary.

In operation of turbine engine 10, incoming airflow F_{I} enters inlet 22 and divides into core flow F_{c} and bypass flow F_{B}, downstream of fan 12. Core flow F_{C} propagates along the core flowpath through compressor section 16, combustor 18 and turbine section 20, and bypass flow F_{B} propagates along the bypass flowpath through bypass duct 14.

LPC section 30 and HPC section 32 of compressor 16 are utilized to compress incoming air for combustor 18, where fuel is introduced, mixed with air and ignited to produce hot combustion gas. Depending on the embodiment, fan 12 also provides some degree of compression (or pre-compression) to core flow F_{C}, and LPC section 30 may be omitted. Alternatively, an additional intermediate spool is included, for example in a three-spool turboprop or turbofan configuration.

Combustion gas exits combustor 18 and enters HPT section 38 of turbine 20, encountering turbine vanes 34 and turbine blades 36. Turbine vanes 34 turn and accelerate the flow, and turbine blades 36 generate lift for conversion to rotational energy via HPT shaft 50, driving HPC section 32 of compressor 16 via HPT shaft 42. Partially expanded combustion gas transitions from HPT section 38 to LPT section 40, driving LPC section 30 and fan 12 via LPT shaft 44. Exhaust flow exits LPT section 40 and turbine engine 10 via exhaust nozzle 24.

The thermodynamic efficiency of turbine engine 10 is tied to the overall pressure ratio, as defined between the delivery pressure at inlet 22 and the compressed air pressure entering combustor 18 from compressor section 16. In general, a higher pressure ratio offers increased efficiency and improved performance, including greater specific thrust. High pressure ratios also result in increased peak gas path temperatures, higher core pressure and greater flow rates, increasing thermal and mechanical stress on engine components.

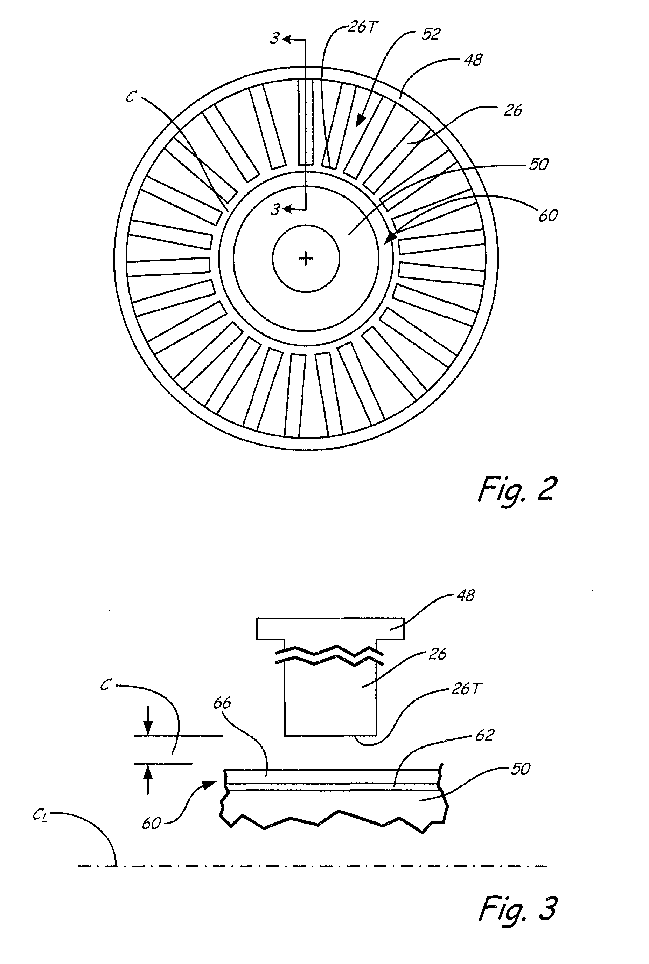

FIG. 2 is a cross section along line 2-2 of FIG. 1 of a casing 48 which has a rotor shaft 50 inside. For the purpose of illustration, the invention is shown with respect to vanes 26. The invention can also be used with rotor blades 28. Vanes 26 are attached to casing 48 and the gas path 52 is shown as the space between vanes 26. Coating 60, corresponding to the coating of this invention, is on rotor shaft 50 such that the clearance C between coating 60 and vane tips 26T of vanes 26 has the proper tolerance for operation of the engine, e.g., to serve as a seal to prevent leakage of air (thus reducing efficiency), while not interfering with relative movement of the vanes and rotor shaft. In FIGS. 2 and 3, clearance C is expanded for purposes of illustration. In practice, clearance C may be, for example, in a range of about 0.025 inches to 0.055 inches (635 microns to 1397 microns) when the engine is cold and 0.000 to 0.035 inches (889 microns) during engine operation, depending on the specific operating conditions and previous rub events that may have occurred.

FIG. 3 shows the cross section along line 3-3 of FIG. 2, with casing 48 and vane 26. Coating 60 is attached to rotor shaft 50, with a clearance C between coating 60 and vane tip 26T of vane 26 that varies with operating conditions, as described herein.

FIG. 3 shows an embodiment comprising bi-layer coating 60 which includes metallic bond coat 62 and abradable layer 66. Metallic bond coat 62 is applied to rotor shaft 50. Abradable layer 66 is deposited on top of bond coat 62 and is the layer that first encounters vane tip 26T. In some embodiments, the bond coat 62 can be eliminated because the abradable layer 66 may have a component that provides sufficient bond strength.

Bond coat 62 is thin, up to 10 mils (254 microns), more specifically ranging from about 3 mils to about 7 mils (about 76 to about 178 microns). Abradable coating 66 is about the same thickness as bond coat 62, again ranging from about 3 mils to about 7 mils (about 76 to about 178 microns).

Bond coat 62 may be formed of MCrAlY, the metal (M) can be nickel, iron, or cobalt, or combinations thereof and the alloying elements are chromium (Cr), aluminum (Al) and yttrium (Y). For example, bond coat 62 may be 15-40% Cr 6-15% Al, 0.61 to 1.0%. Y and the balance is cobalt, nickel or iron and combinations thereof.

Top abrasive layer 66 is formed from grit particles contained in a low strength abrasive composite. Examples of sharp abrasive grits are CBN, zirconia, alumina, silicon carbide, diamond and mixtures thereof. The matrix holding the abrasive grits is a composite matrix of hBN, Ni, Cr, or MCrAlY. The metal (M) can be nickel, cobalt, iron or mixtures thereof, and the alloying elements are chromium (Cr), aluminum (Al) and yttrium (Y). The grit particles range in size from about 20 microns to about 150 microns. Grit sizes much smaller or larger are less effective as a grit particle. Grit particles in the top layer may also range in size from about 25 to about 75 microns in the composite matrix.

Because the top abrasive layer 66 includes a metal matrix, bond coat 62 can be eliminated. In some instances, the metallic matrix material described above can be added as a first layer with or without the hBN component.

The abrasive layer cuts vane tips in a low temperature abrasive manner much like a metal matrix diamond grinding wheel functions. When the grit particles are dulled by excessive use, they are pulled out by the grinding forces and fresh grits are exposed by wear of the matrix. The grits are held in the matrix and cut the vane tips until the grinding forces pull them out to expose fresh grits.

During slow interactions between grits in the matrix and the vanes, cutting forces are low and little rotor coating wear occurs. When the interaction rates increase, and/or the grit particles no longer cut as well due to increased surface temperatures or dulling, the strength of the matrix is exceeded and the grits fall out. This shedding of overstressed grit exposes the composite matrix to vane tip contact and results in abradable wear.

Through the balancing of matrix strength and grit content, a balance is achieved between the needs of the engine to round up parts for optimum efficiency, while providing abradable response during high interaction rate events such as take-off, landing and maneuver loading during surges and the like. The strength of the composite ceramic matrix is sufficient to hold and retain sharp grits that cut with low cutting forces. When the grits dull, forces go up and the grits are released, exposing fresh matrix material and grit material..

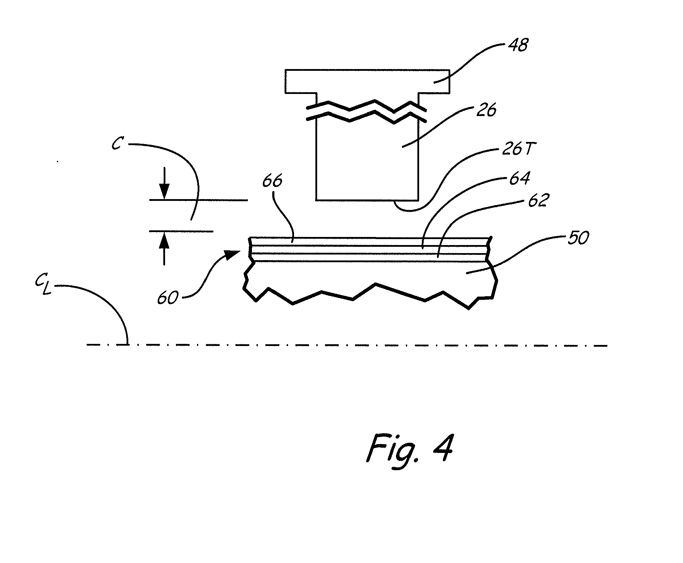

Abrasive layer 66 may also be deposited on an intermediate thermally insulating layer to further protect the rotor shaft from burn through during excessive vane contact. FIG. 4 shows an embodiment comprising tri-layer coating 60, which includes intermediate insulating ceramic layer 64 between top abrasive layer 66 and bottom coat layer 62.

Optional ceramic layer 64, shown in FIG. 4, may be any of the zirconia based ceramics such as are described in commonly U.S. Patent Nos. 4,861,618, 5,879,573, 6,102,656 and 6,358,002. Zirconia stabilized with 6-8 wt. % yttria is one example of such a ceramic layer 64. Other examples are zirconia stabilized with ceria, magnesia, mullite, calcia and mixtures thereof. Optional thermally insulated ceramic layer 64 thickness may range from about 7 mils to about 12 mils (about 178 to about 305 microns). In many instances, there is no need for optional thermally insulating ceramic layer 64 because abrasive coating 66 functions to remove material by low temperature abrasion minimizing or eliminating thermal burn through of the rotor in high interaction rate events.

The present invention provides for an abrasive layer on a gas turbine engine component that interacts with a bare metal surface to abrade the metal and permit effective roundup. In gas turbine engines that are used in flight, the abrasive layer will interact with the bare tip of an airfoil, such as a rotor blade or stator vane. In gas turbine engines that are used on the ground as power stations, the abrasive coating can be on the tip of an airfoil, such as a rotor blade tip or stator vane tip. The abrasive layer abrades the bare metal in all instances, releasing the grit particles when they become dull as noted above.

While the invention has been described with reference to an exemplary embodiment(s), it will be understood by those skilled in the art that various changes may be made and equivalents may be substituted for elements thereof without departing from the scope of the invention defined by the claims. In addition, many modifications may be made to adapt a particular situation or material to the teachings of the invention without departing from the essential scope thereof. Therefore, it is intended that the invention not be limited to the particular embodiment(s) disclosed, but that the invention will include all embodiments falling within the scope of the appended claims.

## Claims

1. An abrasive coating (60) on a gas turbine engine component, the component being one of a rotor shaft, a casing, a stator vane, or a rotor blade, the abrasive coating comprising:
an abrasive layer (66) on the component for contact with a bare metal surface during operation of an engine, the abrasive coating including a plurality of grit particles.

2. The abrasive coating of claim 1, wherein the coating comprising a metal bond coat layer (62) between the component and the abrasive coating and wherein the metal bond coat layer preferably ranges in thickness from about 3 mils to about 7 mils (about 76 to about 178 microns).

3. The abrasive coating of claim 2, wherein the metal bond coat layer (62) is formed of MCrAlY, where M is nickel, iron, cobalt or mixtures thereof.

4. The abrasive coating of claim 1, 2 or 3, wherein the plurality of grit particles are in a matrix of hexagonal boron nitride, Ni, Cr, MCrAlY and mixtures thereof, and wherein the metal (M) can be nickel, cobalt, iron or mixtures thereof.

5. The abrasive coating of any preceding claim, wherein the abrasive grit particles are selected from the group consisting of cubic boron nitride (CBN), zirconia, alumina, silicon carbide, diamond and mixtures thereof.

6. The abrasive coating of any preceding claim, wherein the abrasive grit coating has a particle size ranging from about 25 microns to about 75 microns.

7. The abrasive coating of any preceding claim, wherein the abrasive layer (66) ranges in thickness from about 3 mils to about 30 mils (about 76 to about 763 microns).

8. The abrasive coating of claim 2 or claims 3 to 7 when dependent on claim 2, which further includes a ceramic layer (64) between the bond layer (62) and the abrasive layer (66), the ceramic layer having a thickness ranging from about 7 mils to about 12 mils (about 178 to about 305 microns).

9. The abrasive coating of any preceding claim, wherein the coating is on a rotor shaft, and an abrasive coating is for contact with cantilevered vanes during operation of the rotor shaft to form an abradable air seal.

10. The abrasive coating of claim 9, wherein the abrasive coating ranges in thickness from about 3 mils to about 7 mils (about 76 to about 178 microns).

11. The abrasive coating of claim 3, wherein the metal bond layer (62) is formed of MCrAlY, where M is nickel or cobalt, and the alloying elements are chromium (Cr), aluminum (Al) and yttrium (Y).

12. A compressor for a gas turbine engine comprising:
a first airfoil tip at a radial outward end of a first airfoil and a second airfoil tip at a radial inward end of a second airfoil;
a seal member adjacent to the first airfoil tip and a seal member adjacent to the second airfoil tip wherein one of the seal member adjacent the first airfoil tip and the airfoil tip and/or one of the seal member adjacent to the second airfoil tip and the second airfoil tip is coated with an abrasive coating of any preceding claim and the other is bare metal.
